# EUROPÄISCHE PATENTANMELDUNG

(11) **EP 1 239 565 A1**
(43) Veröffentlichungstag der Anmeldung: **11.09.2002**
(21) Anmeldenummer: 02001731.5
(22) Anmeldetag: 25.01.2002
(51) Int. Cl.: H02G 3/30

(54) **Arbeitsplatz-Installationseinrichtungen**

(30) Priorität: 12.02.2001 DE 20102741 U
(71) Anmelder: Pöllet, Wilfried, D-90596 Schwanstetten (DE)
(72) Erfinder: Pöllet, Wilfried, 90596 Schwanstetten (DE); Gallé, Ralph, 90596 Schwanstetten (DE)

(57) **Zusammenfassung**

An einem Raumteiler (340) werden, im Innern manuell leicht zugängliche, Installationsgehäuse (350) zur Aufnahme von Installationseinrichtungen wie insbesondere Kabel-Steckverbindern, aber auch etwa für Schalter, Sicherungen, Leuchten, Steckdosenleisten oder für ein Interface zu einem PC in derartigen Positionen seitlich versetzbar aufgehängt. daß sich nur möglichst kurze freie Leitungsführungen zumal bezüglich der verlagerbaren Anordnung eines Arbeitsplatzes (315) ergeben. Dadurch müssen manuelle Operationen zum Ändern der Verkabelung nicht mehr in den beengten Innenräumen des Raumteilers (340) oder seines Kabelkanales bzw. seiner Standpfeiler (338) und Traversen (335) ausgeführt werden, und diese Räume stehen nun - nach einer manuell gesteckten Neuverkabelung im Installationsgehäuse (350) - ohne hinderliche Einbauten dem Hineinschieben von Kabel-Überlängen zur Verfügung, die auch das seitliche Versetzen der Gehäuse (350) ermöglichen, um dadurch einer Verlagerung des Arbeitsplatzes (315) folgen zu können.

## Beschreibung

Die Erfindung betrifft Installationseinrichtungen bei Raumteilern, wie sie zum variablen Untergliedern von Großraumbüros in individuelle Arbeitsplätze, etwa zur Einrichtung eines Call-Centers, handelsüblich sind. Solche Raumteiler weisen ein Rastersystem aus frei aufstellbaren und mittels Traversen miteinander zu verbindenden Pfeilern auf. Die Pfeiler müssen sich nicht bis zur Decke des Raumes erstrecken, die Traversen verlaufen typisch in einer Höhe in der Größenordnung von zwei Metern. Zwischen die Pfeiler werden bis unter die Traversen reichende Sichtblenden eingehängt, die gewöhnlich (aber nicht zwingend) aus zwei zueinander parallel aufgehängten Wandelementen des Raumteilers bestehen, welche dann zwischeneinander einen flachen Hohlraum einfassen. Längs des unteren Randes der untersten Sichtblende ist zwischen je zwei einander benachbarte Pfeiler ein kanalförmiges flaches Gehäuse nach Art eines Installationskanales eingehängt, dessen Tiefe gerade der Wandstärke des Raumteilers entspricht. Die Deckwand dieses Kanal-Gehäuses ist mit Steckdosen für Stark- und Schwachstromanschlüsse bestückt, die im Innern des Kanales verdrahtet sind. Von dort verlaufen die Speiseleitungen aus dem Gehäuse nach oben heraus in den Hohlraum zwischen den Wandelementen der Sichtblenden hinein, oder aber zunächst in Längsrichtung durch das Gehäuse hindurch zu einem der beiden benachbarten Pfeiler und dort dann in dessen hohles Innere hinein. In beiden Fällen verläuft die Verkabelung weiter nach oben, in die hohlen Traversen hinein, und in den Traversen zu bauseitigen Einspeisestellen, etwa zu einer Wand oder durch einen anderen Pfeiler zum Boden oder zur Decke des Großraumes.

Das in Zusammenhang mit derartigen Raumteilern so gern zitierte variable Büro existiert allerdings real nur während der Ersteinrichtungsphase. Sobald einmal die zahlreichen Anschlüsse für die verschiedenen Versorgungs-, Telekommunikations- und Datennetze hergestellt sind, kann von Freizügigkeit im Umstellen der Arbeitsplätze kaum noch die Rede sein. Denn wenn man nicht unschöne und unfallträchtige Stolperschlingen provozieren will, läßt sich der einmal optimal angeschlossene Arbeitsplatz nur noch marginal verschieben. Soll etwa neben einem am Wandauslaß orientierten Schreibtisch nachträglich noch ein Aktencontainer aufgestellt werden, dann paßt die Anschlußverkabelung womöglich schon deshalb nicht mehr, weil dadurch der bisherige Anschluß verstellt wird, während der im Rastermaß des Raumteilers nächstfolgende Auslaß für Energie- oder Datenleitungen wesentlich weiter als die Breite des zusätzlich aufgestellten Containers entfernt ist, so daß wieder erhebliche Abstände durch störende lose Leitungsführungen zu überbrücken sind. Da die Innenquerschnitte der zwischen den Pfeilern eingehängten kanalförmigen Kästen im wesentlichen von den Sockeln der Steckdosen ausgefüllt sind, ist es nämlich aus Platzmangel kaum möglich, hier im engen Kanal-Gehäuse vor Ort Verdrahtungsänderungen vorzunehmen, um neuen Anschlußerfordernissen gerecht zu werden, oder statt dessen wenigstens für eine nachträgliche Verschiebung eines Schreibtisches oder dergleichen Arbeitsplatzes vorzuhaltende Überlängen hier hineinzuschieben. Hinzu kommt, daß die vieladrigen abgeschirmten Datenkabel so steif sind, daß sie ohnehin nicht im beengten Gehäusequerschnitt in der Umgebung ihres Anschlusses an Datensteckdosen in Schleifen gelegt werden können, um im Interesse der Freizügigkeit für spätere Änderungen Überlangen bereitstellen zu können.

Unbefriedigend ist also, daß selbst am zunächst sorgfältig installierten Arbeitsplatz in der Praxis alsbald ästhetisch und verkehrstechnisch störende lose Leitungsführungen auftreten, weil Installationsänderungen oder Nachinstallationen wegen der knappen Raumverhältnisse nicht mehr in die Erstinstallation eingebunden werden können; zumal bei der Büromöbelindustrie der Trend zu Kabelkanälen kleineren Querschnittes an dem oder unter dem hinteren Rand des Arbeitsplatzes und sogar zum gänzlichen Verzicht auf solche kostspieligen Installationshilfen erkennbar ist. Deshalb bedarf es schon außergewöhnlichen Einsatzes, die Leistungs- und Datenkabel von nachträglich zusätzlich in Betrieb genommenen Geräten nicht mangels Platzes im Kabelkanal des Raumteilers einfach davor lose herumhängen zu lassen, sondern wenigstens in ordentliche Kabelführungen einzubinden.

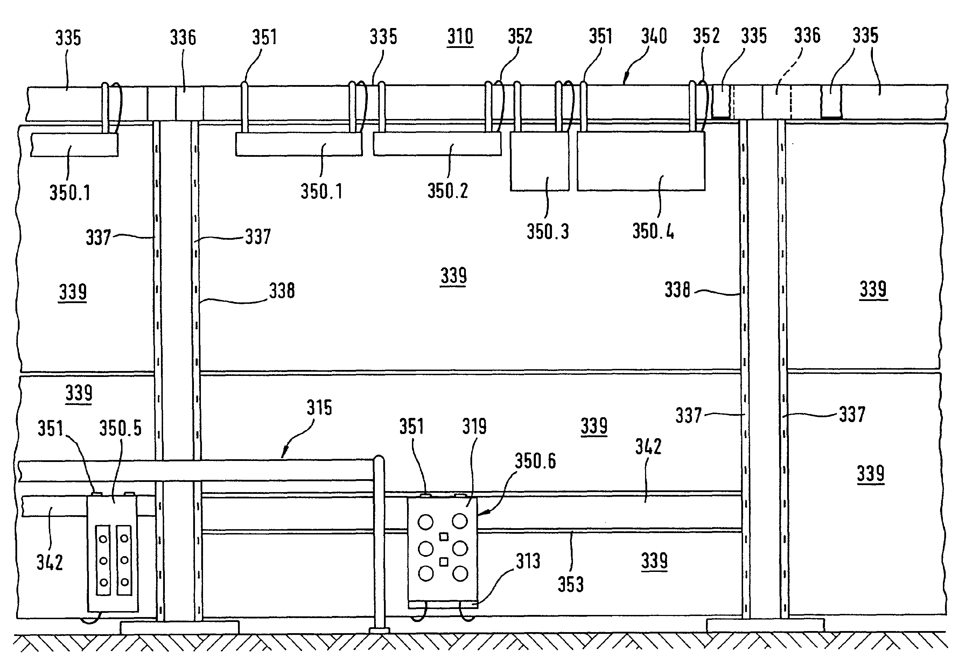

Diese unbefriedigende Situation bei Verwendung von ― kostspieligen ― Steckdosenleisten mit ihrem festen Rastermaß der Starkstrom- bzw. Schwachstrom-Steckstellen ist etwa aus der US 5,743,052 (vgl. dort insbesondere Fig2 / Fig.5) ersichtlich. Fig.2 in DE 30 30 301 Al ist ein Beispiel für die oben erwähnten Sockelleisten-Installationen ― in dieser Publikation mit der Besonderheit, unter den unteren Rändern der Stellwände längsverlaufende Hohlräume als Kabelkanäle von der Breite der Stellwand-Dicke freizusparen. Dergleichen Kabelkanäle sind bei einer Installationseinrichtung nach der US 5,913,787 in die Mittenregionen der als Raumteiler dienenden Stellwände verlegt, parallel verlaufend zu Traversen, die paarweise zwischen Pfeilern für die Halterung von beidseitigen Sichtblenden eingehängt sind. Einzelne solcher Traversen sollen als Tragschienen für kleine Installationsgehäuse dienen, die - mit an Daten- oder Versorgungsleitungen angeschlossenen Steckdosen ausgestattet - im Innenraum zwischen zwei Sichtblenden je nach den Überlängen der angeschlossenen Leitungen zwischen den Pfeilern verschiebbar und an der jeweiligen Position nur durch eigens vorzusehende Löcher in der Sichtblende hindurch für Stecker zugänglich sind.

Schon gar nicht ist das bisherige System deshalb geeignet, die Raumaufteilung quasi "über Nacht vom Hausmeister" grundlegend verändern zu können, dafür sind die derzeit im Einsatz befindlichen Installationshilfen nicht flexibel und handhabungsfreundlich genug.

In Erkenntnis dieser Gegebenheiten liegt vorliegender Erfindung die Aufgabe zugrunde, Installationseinrichtungen für variabel einrichtbare Arbeitsplätze anzugeben, welche die optischen und technischen Nachteile loser Kabelführung mit frei verlaufender Schlaufenbildung infolge zu überbrückender Abstände und infolge des für die Handhabbarkeit notwendigen Vorhaltens von Überlängen zu vermeiden helfen und dennoch eine erheblich gesteigerte Flexibilität in der räumlichen Aufstellung von Arbeitsplätzen eröffnen.

Die Lösung dieser Aufgabe ist gemäß der Merkmalskombination des Hauptanspruches im wesentlichen darin zu sehen, nicht mehr quasi innerhalb des Raumteilers, also beschränkt auf Einbauverhältnisse in seiner Wandstärke, Installationsanschlüsse bereitzustellen, sondern separate Installationsgehäuse verschiedener, an die jeweilige Anforderung insbesondere des Hantierens zum Eingriff in die Verkabelung angepaßter Abmessungen beim Arbeitsplatz vor der jeweiligen Sichtblende des Raumteilers und vorzugsweise längs dieser verschiebbar oder sonstwie freizügig seitlich versetzbar aufzuhängen. Insbesondere kann diese Aufhängung am oberen Rand der obersten Sichtblenden (also direkt unter den Traversen) oder ― besser noch ― direkt an den Traversen erfolgen, so daß die Installationsgehäuse nur deutlich oberhalb des Verkehrsraumes von der Sichtblende in den Raum mit dem Arbeitsplatz vorkragen und dadurch keine Verletzungsgefahr für Personen hervorrufen, die sich zwischen den Raumteilern bewegen. Die Kabelführung verläuft dann aus dem jeweiligen Gehäuse heraus in kurzem Bogen um die Oberkante der Traverse herum in deren nach oben geöffneten U-förmigen Hohlraum hinein. Statt dessen oder zusätzlich können die Installationsgehäuse auch an Schienen längsversetzbar aufgehängt werden, die in oder unter der Arbeitsebene eines Arbeitsplatzes vor einer Sichtblende oder in einer Teilungsfuge zwischen zwei übereinander gehalterten Sichtblenden zwischen benachbarten Pfeilern des Raumteilers eingehängt sind. Die Kabelführung verläuft dann im kurzen Bogen aus dem Gehäuse um den unteren Rand der Sichtblende herum bzw. durch einen Spalt zwischen Schiene und Sichtblende hindurch in den Hohlraum des zweischaligen Raumteilers hinein oder längs der Schiene in den nächstbenachbarten hohlen Pfeiler hinein.

Am Raumteiler werden also erfindungsgemäß Gehäuse, die in ihrem Innern leicht zugänglich sind, zur Aufnahme von Installationseinrichtungen wie insbesondere von Kabel-Steckverbindern, aber etwa auch von Schaltern, Sicherungen, Leuchten und Steckdosenleisten oder für ein Interface zu einem PC aufgehängt. Die Gehäuse sind einerseits zwecks leichter manueller Zugänglichkeit und andererseits zwecks möglichst kurzer freier Leitungsführungen in günstige Positionen etwa relativ zur aktuell gewünschten Anordnung eines Arbeitsplatzes seitlich versetzbar. Dadurch müssen manuelle Operationen zum Ändern der Verkabelung nicht mehr in den beengten Innenräumen des Raumteilers oder seines Kabelkanales bzw. seiner Standpfeiler und Traversen ausgeführt werden, was sich oft in der Praxis als fast undurchführbar erwies; und die Innenräume dieser wahlfrei an den Raumteiler angehängten Gehäuse stehen nun etwa nach einer darin manuell gesteckten Neuverkabelung - ohne hinderlich in Erscheinung tretende Verjüngungen durch Installationseinbauten - auch zum Hineinlegen von handhabungsfreundlichen Kabel-Überlängen in großzügiger Schlingenverlegung zur Verfügung. Infolge derer sind die Gehäuse danach auch noch freizügig seitlich verlagerbar, um z.B. einer nachträglichen Verschiebung des Arbeitsplatzes folgen zu können.

Bezüglich weiterer Merkmale, Abwandlungen und Weiterbildungen dieser Erfindung sowie deren Vorteilen wird auf die weiteren Ansprüche verwiesen, sowie auf nachstehende Beschreibung eines in der Zeichnung nicht ganz maßstabsgerecht skizzierten bevorzugten Ausführungsbeispieles zur erfindungsgemäßen Lösung. Die einzige Figur der Zeichnung zeigt einen mit verschiedenen Installationsgehäusen verschiebbar bestückten mehrgliedrigen Raumteiler in der Umgebung eines Arbeitsplatzes.

In einem Großraum 310 erfolgt die gegenseitige Abgrenzung einzelner einander benachbarter Arbeitsplätze 315 voneinander durch die Wandelemente von Raumteilern 340 aus tafelförmigen Sichtblenden 339, die zwischen variabel aufstellbaren Pfeilern 338, etwa in Schlitzlöcher deren vertikal angeordneter Lochleisten 337, eingehängt sind. Die z.B. nach Abnahme von Deckeln im Innern zugänglichen hohlen Pfeiler 338 sind untereinander durch ebenfalls hohle, im Querschnitt U-förmig nach oben offene Traversen 335 mittels Kupplungsknoten 336 in Form von Vielflächnern für unterschiedliche Einschlußwinkel der hier angeschlossenen Traversen 335 verbunden. Seine räumliche Stabilität erfährt der Raumteiler 340 vor allem dadurch, daß einander benachbarte Traversen 335 samt ihren darunter gelegenen Sichtblenden 339 von Fall zu Fall nicht (wie skizziert) mehrgliedrig in einer durchgehenden Ebene verlaufen, sondern am verbindenden Kupplungsknoten 336 jeweils aus der bisherigen Richtung heraus verschwenkt sind, so daß sich ein standfester dreieckförmiger Grundriß des Verlaufes des Raumteilers 340 ergibt.

Um auch schon die Erstinstallation, vor allem aber danach Installationsänderungen leicht handhaben zu können, sind statt der üblicherweise anzutreffenden, in die Wandstärke des Raumteilers 340 integrierten und deshalb flachen, mit Steckdosen bestückten Installationskanäle nun erfindungsgemäß unterschiedlich bemessene und bestückte Installations-Gehäuse 350 vorgesehen, die mittels Bügeln 351 in variablen Positionen vor den Sichtblenden 339 aufgehängt sind. Zur Verdeutlichung ist diese Aufhängung in der Zeichnung unter den Traversen 335 dargestellt; für die Praxis ist aber eine Aufhängung der Gehäuse 350 direkt vor den Traversen 335 zu bevorzugen, um den Verkehrsraum vor der Sichtblende 339 unter den Gehäusen 350 frei zu halten und um nur kurze und deshalb optisch wenig in Erscheinung tretende Kabelbögen 352 aus den Gehäusen 350 oben heraus in den unmittelbar benachbarten, nach oben offenen Hohlraum der Traversen 335 hinein zu ermöglichen.

So hängen an den Traversen 335 wie beispielshalber skizziert direkt über dem Arbeitsplatz 315 nebeneinander zwei mit nach unten abstrahlenden Leuchten ausgestattete flache Gehäuse 350.1, daneben in gleichen Abmessungen ein mit Installationsverteilern für Stark- oder Schwachstrom ausgestattetes Gehäuse 350.2, ein würfelförmiges Gehäuse 350.3 etwa zur Aufnahme von Sicherungen und Hauptschaltern für die Energieversorgung dieses Arbeitsplatzes 315 und ein Gehäuse 350.4 damit gleicher Querschnitts-Abmessung aber größerer Länge zur Aufnahme z.B. eines Kreuzschienen-Verteilers für die Leitungen von Datennetzen. Insbesondere solche Schalter- und Kreuzschienen-Gehäuse 350.3, 350.4 sind zweckmäßigerweise mit eventuell sogar durchsichtigen Fronttüren versehen, um den Schaltzustand im laufenden Betrieb leicht visuell überprüfen und erforderlichenfalls direkt manuell ändern zu können. Bei einem Verteiler-Gehäuse 350.2 für die Energieversorgung genügt es dagegen, daß die darin untergebrachten Kabelsteckstellen nach Abnahme einer Deckplatte von oben zugänglich sind, weil sie nur selten umgesteckt werden müssen, etwa für eine komplette Neu- oder Ergänzungsinstallation.

Zum entsprechend seitlich verschiebbaren Aufhängen von Installations-Gehäusen 350 in unmittelbarer Nähe des Arbeitsplatzes 315 ist eine zwischen zwei einander benachbarten Pfeilern 338 in deren Lochleisten 339 eingehängte Tragschiene 342 vorgesehen, die (in der Zeichnung unten links) vor einer vertikal durchgehenden Sichtblende 339 oder wie in der Zeichnung unten in der Mitte skizziert in einer Trennfuge 353 zwischen zwei übereinander gelegenen Sichtblenden 339 des Raumteilers 340 verläuft. Eine leichtere Ausführung der (in der Zeichnung unten links) vor einer Sichtblende 339 verlaufend gezeigten Tragschiene 342 ist etwa für leichte Gehäuse 350.5 geringer Tiefe mit wie skizziert getrennten Steckdosenleisten für unterschiedliche (etwa stabilisierte und nicht-stabilisierte oder für abschaltbare und permanente) Versorgungsnetze vorgesehen. Dagegen bedarf es einer stabileren Tragschiene 342, um daran längsverfahrbar ein L-förmiges Traggestell mit einer vorkragenden Grundplatte 313 zur bodenfreien Halterung eines Arbeitsplatzrechners (in der Zeichnung in der Mitte unten nicht dargestellt) unter oder wie skizziert neben dem Arbeitsplatz 315 aufzunehmen. Für dessen Versorgungs- und Datenanschluß ist die Grundplatte 313 zur Schiene 342 hin mit einer ― vorzugsweise beidseitig manuell zugänglichen und deshalb freistehenden ― Übergabewand 319 ausgestattet, die ihrerseits als Computerinterface mit Steckdosen für ankommende und abgehende Energie- und Datenkabel bestückt ist, wie insoweit in meiner Gebrauchsmusteranmeldung 20021771 vom 15.12.2000 näher beschrieben, worauf hier zur weiteren Offenbarung vorliegender Erfindung Bezug genommen wird. Für Datensteckdosen werden die schon mit Kupplungen konfektionierten Kabelenden unmittelbar in Fassungen eingeklinkt, so daß die Kupplungen unmittelbar als Steckstellen dienen, wodurch hier störanfällige und voluminöse zusätzliche Übergangsstellen vermieden sind, wie etwa in der eigenen Gebrauchsmusteranmeldung 29918768 vom 19.10.1999 näher ausgeführt.

Die vielfältigen Kabelverbindungen untereinander und zu den Verteilern von Starkstrom-, Schwachstrom-, Telekommunikations- und Datennetzen erfolgen also erfindungsgemäß nicht mehr in den beengten Räumen in einer Hohlwand oder ihren Kabelkanals bzw. eines Pfeilers 338 oder einer Traverse 335 von Raumteilern 340, sondern nun außerhalb derer in einem leicht erreichbaren da räumlich großzügig bemessenen und vor der Sichtblende 339 des Raumteilers 340 bedarfsweise in eine handhabungstechnisch günstige Position verschiebbaren Installations-Gehäuse 350 mittels der eingeführten polunverwechselbaren Flachstecker etwa eines WIELAND-Profils für Starkstrom und eines AMP-Profils für Schwachstrom sowie mittels TEXAS- und dergleichen Vielfach-Steckverbinder für Telekommunikations- und für Datenleitungen. Deshalb sind nun alle Kabelverbindungen problemlos herstellbar und nachprüfbar. Die Hohlräume im Raumteiler 340, in den Pfeilern 338 und in den Traversen 335 sind nun nicht mehr durch Einbauten beengt, sondern sie stehen völlig zum Hineinschieben und Herausziehen von Kabel-Überlängen zur Verfügung.

## Patentansprüche

1. Arbeitsplatz-Installationseinrichtungen in Form von Installations-Gehäusen (350), in denen Steckstellen für Verkabelungen von Stark- und Schwachstrom- und / oder von Telekommunikations- und Datennetzen untergebracht sind, bei einem Raumteiler (340) mit zwischen Pfeilern (338) aufgehängten Traversen (335) und / oder Tragschienen (342) sowie mit Sichtblenden (339), vor welchen an den Traversen (335) und / oder Tragschienen (342) die Installations-Gehäuse (350) aufgehängt sind.

2. Installationseinrichtungen nach dem vorangehenden Anspruch, **dadurch gekennzeichnet, daß** Tragschienen (342) vor Sichtblenden (339) verlaufen.

3. Installationseinrichtungen nach einem der vorangehenden Ansprüche, **dadurch gekennzeichnet, daß** Tragschienen (342) zwischen übereinander gelegenen Sichtblenden (339) verlaufen.

4. Installationseinrichtungen nach einem der vorangehenden Ansprüche, **dadurch gekennzeichnet, daß** mit Leuchten ausgestattete Gehäuse (350.1) vorgesehen sind.

5. Installationseinrichtungen nach einem der vorangehenden Ansprüche, **dadurch gekennzeichnet, daß** mit Kabel-Steckverbindern ausgestattete Gehäuse (350.2) vorgesehen sind.

6. Installationseinrichtungen nach einem der vorangehenden Ansprüche, **dadurch gekennzeichnet, daß** mit Sicherungen und / oder Schaltern ausgestattete Gehäuse (350.3) vorgesehen sind.

7. Installationseinrichtungen nach einem der vorangehenden Ansprüche, **dadurch gekennzeichnet, daß** mit Datenkabel-Verteilern ausgestattete Gehäuse (350.4) vorgesehen sind.

8. Installationseinrichtungen nach einem der vorangehenden Ansprüche, **dadurch gekennzeichnet, daß** mit Steckdosen verschiedener Versorgungskreise ausgestattete Gehäuse (350.5) vorgesehen sind.

9. Installationseinrichtungen nach einem der vorangehenden Ansprüche, **dadurch gekennzeichnet, daß** mit vorkragender Grundplatte (313) zur Aufnahme eines Arbeitsplatzrechners ausgestattete Gehäuse (350.6) vorgesehen sind.

10. Installationseinrichtungen nach dem vorangehenden Anspruch, **dadurch gekennzeichnet, daß** die Grundplatte (313) mit einer mit Steckstellen ausgestatteten Übergabewand (319) für die Verkabelung des Arbeitsplatzrechners versehen ist.
